# FASCICULE DE BREVET EUROPEEN

(11) **EP 3 817 978 B1**
(45) Date de publication et mention de la délivrance du brevet: **15.06.2022**
(21) Numéro de dépôt: 19756217.6
(22) Date de dépôt: 03.07.2019
(51) Int. Cl.: B64D 27/14, B64D 27/20, F02K 3/072, F02C 6/02, B64D 27/24, F01D 15/10, F02K 3/04, F02K 3/062, F02K 3/12, B64D 27/02, B64D 33/02, F01D 13/02, B64D 27/00

(54) **SYSTÈME PROPULSIF D'AÉRONEF ET AÉRONEF PROPULSÉ PAR UN TEL SYSTÈME PROPULSIF INTÉGRÉ À L'ARRIÈRE D'UN FUSELAGE DE L'AÉRONEF**
ANTRIEBSFLUGZEUG UND FLUGZEUGSYSTEM, ANGETRIEBEN DURCH EIN INTEGRIERTES ANTRIEBSSYSTEM AN DER RÜCKSEITE EINES FLUGZEUGRUMPF
PROPULSION SYSTEM AND AIRCRAFT PROPELLED BY SUCH A PROPULSION SYSTEM INTEGRATED AT THE REAR OF AN AIRCRAFT FUSELAGE

(30) Priorité: 04.07.2018 FR 1856156
(43) Date de publication de la demande: 12.05.2021
(73) Titulaire: SAFRAN AIRCRAFT ENGINES, 75015 Paris (FR)
(72) Inventeur: TANTOT, Nicolas, Jérôme, Jean, 77550 MOISSY-CRAMAYEL (FR); GALLET, François, 77550 MOISSY-CRAMAYEL (FR)
(74) Mandataire: Gevers & Orès
(86) Numéro de dépôt international: PCT/FR2019/051650
(87) Numéro de publication internationale: WO 2020/008147

(56) Documents cités:
- EP-A2- 2 730 501
- WO-A1-2016/020618
- DE-A1-102013 209 538
- FR-A1- 2 997 681
- US-A1- 2017 320 584
- US-A1- 2018 003 071
- US-A1- 2018 057 150

## Description

### DOMAINE TECHNIQUE ET ETAT DE LA TECHNIQUE

La présente invention se rapporte au domaine des aéronefs, tels que des avions notamment civils, propulsés par un système propulsif à soufflantes contrarotatives qui est intégré à l'arrière d'un fuselage de l'aéronef dans le prolongement de celui-ci. Elle concerne plus particulièrement un dispositif intégré au système propulsif pour fournir une combinaison d'énergie aérodynamique et électrique au système propulsif.

L'état de la technique comporte notamment les demandes de brevet WO-A1-2016/020618, US-A1-2018/003071, DE-A1-10 2013 209538, US-A1-2017/320584, US- A1-2018/057150 et EP-A2-2 730 501.

Il a été proposé dans la demande de brevet FR-A1-2 997 681 du déposant, une nouvelle architecture d'aéronef permettant de réduire les nuisances sonores et la consommation de carburant de l'aéronef en limitant la trainée aérodynamique par absorption de la couche limite.

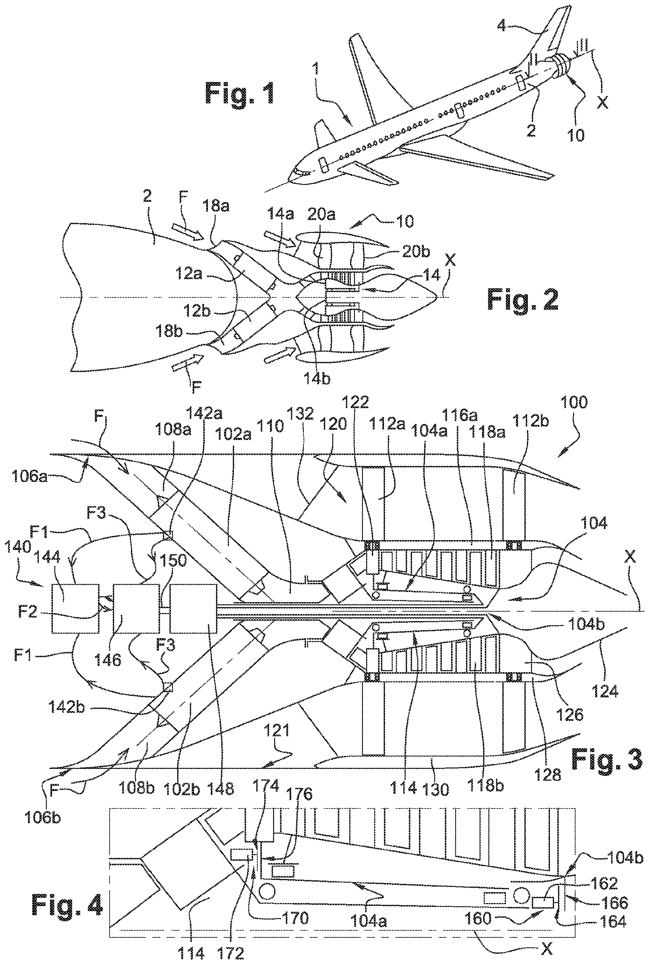

Dans une telle architecture, comme représenté sur la figure 1, un aéronef 1 est propulsé par une turbomachine, ici un turboréacteur 10, à soufflantes contrarotatives carénées, la turbomachine étant intégrée en pointe arrière de fuselage 2 de l'aéronef. En fonctionnement, ce turboréacteur est équivalent à une configuration bimoteur. Généralement, comme représenté sur la figure 2, le turboréacteur 10 comporte, d'amont en aval dans le sens d'écoulement des gaz représenté par les flèches F, deux générateurs de gaz 12a, 12b distincts montés en parallèle qui alimentent une unique turbine de puissance 14. La turbine de puissance 14 comporte deux rotors de turbine 14a, 14b contrarotatifs qui entrainent deux soufflantes 20a, 20b disposées en aval des générateurs de gaz 12a, 12b. Des entrées d'air 18a, 18b latérales et distinctes sont agencées pour alimenter chaque générateur de gaz 12a, 12b. Ainsi, les générateurs de gaz alimentent aérodynamiquement la turbine de puissance. En aval des générateurs de gaz 12a, 12b, les soufflantes 20a, 20b sont disposées dans le prolongement du fuselage 2 de l'aéronef et généralement alimentées par une couronne annulaire, centrée sur l'axe X, reliée à ce dernier de manière à absorber une partie au moins de la couche limite formée autour du fuselage 2. Le diamètre des soufflantes 20a, 20b est de l'ordre de celui du fuselage 2 dans sa plus grande section. La vitesse de rotation des soufflantes 20a, 20b est généralement plus basse que pour des turbomachines classiques, notamment pour que la vitesse en tête d'aube soit subsonique.

Cependant, une telle architecture présente des problèmes de maintien d'un niveau de poussée minimal, qui est sensiblement égal à 50 % de la poussée globale nominale, ainsi que des problèmes de robustesse du système propulsif, en cas de défaillance d'une partie du système propulsif.

De plus, il existe des turbomachines qui sont en outre configurées pour entrainer des équipements auxiliaires. Il a été proposé dans la demande de brevet FR-A1-3 039 206 du déposant, une telle architecture qui comporte un rotor de turbine libre découplé de la turbine de puissance et configuré pour transformer une partie de l'énergie du flux primaire provenant des générateurs de gaz en puissance mécanique sur un arbre rotatif auxiliaire et pour être couplé à au moins un équipement auxiliaire, comme par exemple un générateur électrique. L'équipement auxiliaire est un équipement ne participant pas à la production d'une poussée par la turbomachine, mais qui, en assurant des fonctions telles que la production d'électricité ou la mise en circulation de fluides, participe au fonctionnement soit de la turbomachine, soit de l'aéronef plus généralement.

En outre, il existe un besoin de minimiser les émissions polluantes liées à la combustion de carburant fossile, telles que des émissions de CO₂ ou de NOx imbrûlés.

Il existe donc un besoin d'un système propulsif destiné à être intégré à l'arrière d'un fuselage de l'aéronef qui puisse maintenir un niveau de poussée minimal et qui présente une robustesse améliorée en cas de défaillance d'une partie du système propulsif, tout en réduisant les émissions polluantes de l'aéronef.

La présente invention a notamment pour but d'apporter une solution simple, économique et efficace à ces problèmes, permettant d'éviter les inconvénients de la technique connue.

En particulier, la présente invention permet la propulsion de l'aéronef sur la base d'une combinaison d'énergie aérodynamique et électrique.

### EXPOSE DE L'INVENTION

A cet effet, l'invention concerne un système propulsif d'aéronef destiné à être intégré à l'arrière d'un fuselage de l'aéronef, le système propulsif comprenant, d'amont en aval dans le sens d'un écoulement de gaz dans le système propulsif, au moins deux générateurs de gaz alimentant une turbine de puissance ayant deux rotors de turbine contrarotatifs pour entraîner deux soufflantes disposées en aval des générateurs de gaz, et des entrées d'air distinctes pour alimenter chaque générateur de gaz, caractérisé en ce qu'il comprend un dispositif d'entrainement électrique configuré pour entrainer en rotation au moins un des rotors de turbine et comportant au moins un générateur électrique configuré pour transformer une partie de l'énergie du flux provenant des générateurs de gaz en puissance électrique et un moteur électrique alimenté par ledit générateur électrique et apte à entrainer en rotation au moins un des rotors de turbine, ledit générateur électrique étant installé sur un desdits générateurs de gaz, et en ce que ledit rotor de turbine est apte à être entrainé en rotation simultanément par un flux provenant desdits générateurs de gaz et par le dispositif d'entrainement électrique.

Avantageusement, le système propulsif selon l'invention permet de propulser l'aéronef grâce à une combinaison d'énergie aérodynamique et électrique, et non pas sur la base d'une énergie exclusivement aérodynamique comme pour les systèmes propulsifs selon l'art antérieur. Ceci permet avantageusement de diminuer l'utilisation de carburant fossile, et donc de réduire les émissions polluantes.

Le dispositif d'entrainement électrique est avantageusement dimensionné au juste besoin d'assistance du système propulsif, ce qui permet de minimiser l'impact massique dudit dispositif d'entrainement électrique. De plus, grâce à l'assistance électrique fournie par le dispositif d'entrainement électrique, il est possible de réduire les dimensions des générateurs de gaz du système propulsif.

En outre, le dispositif d'entrainement électrique permet de pallier la défaillance d'au moins une partie du système propulsif selon l'invention, ce qui permet d'améliorer la robustesse de l'aéronef intégrant ce système propulsif.

De plus, le dispositif d'entrainement électrique est avantageusement évolutif et reconfigurable en fonction de l'état de défaillance des éléments du système propulsif selon l'invention.

En variante, le dispositif d'entrainement électrique peut comporter une unique machine électrique, telle qu'un démarreur/générateur, configurée pour transformer une partie de l'énergie du flux provenant des générateurs de gaz en puissance électrique et pour entraîner en rotation au moins un des rotors de turbine.

De préférence, le dispositif d'entrainement électrique comporte des moyens de stockage d'énergie électrique alimentés par le générateur électrique et configurés pour alimenter le moteur électrique. Les moyens de stockage comprennent, par exemple, des batteries ou des super-condensateurs.

Les moyens de stockage peuvent être configurés pour alimenter le moteur électrique pour au moins trois phases de vol de pleine puissance propulsive, telles qu'au décollage ou en montée de l'aéronef, successives.

Les moyens de stockage peuvent être configurés pour alimenter le moteur électrique lors d'une phase de vol de puissance réduite, telle qu'en ralenti, super-ralenti ou au sol.

Une phase de ralenti est définie comme une phase de fonctionnement du système propulsif à une puissance minimale permettant d'assurer les besoins en énergie non propulsive de l'aéronef, par exemple les besoins en électricité et en air pressurisé requis par l'aéronef.

Une phase de super-ralenti est définie comme une phase de fonctionnement du système propulsif à une puissance minimale durant laquelle les besoins en énergie non propulsive de l'aéronef ne sont pas assurés par le système propulsif, mais sont assurés par un autre système de l'aéronef.

Dans ce cas, au moins un des rotors de turbine est apte à être entrainé en rotation uniquement par le dispositif d'entrainement électrique lors d'une phase de vol de puissance réduite.

Les moyens de stockage peuvent être configurés pour se décharger et alimenter le moteur électrique lors d'une phase de vol de pleine puissance propulsive, telle qu'au décollage ou en montée de l'aéronef. Les moyens de stockage peuvent être configurés pour se recharger lors d'une phase de vol de puissance propulsive intermédiaire, telle qu'un vol croisière.

Les moyens de stockage peuvent être configurés pour fournir au moins de l'énergie propulsive en cas de défaillance d'au moins un générateur de gaz, et pour fournir de l'énergie non propulsive en cas de fonctionnement nominal, ainsi qu'en cas de défaillance d'au moins une partie du système propulsif.

De préférence, les générateurs de gaz sont configurés pour fournir entre 80 % et 95 %de la puissance primaire principale aux rotors de turbine lors d'une phase de vol de pleine puissance propulsive, telle qu'au décollage. Dans ce cas, les moyens de stockage et le moteur électrique peuvent être configurés pour fournir entre 5 % et 20 % de la puissance primaire principale aux rotors de turbine lors d'une phase de vol de pleine puissance propulsive.

Optionnellement, le dispositif d'entrainement électrique peut comporter un réducteur connecté au moteur électrique et aux rotors de turbine et configuré pour transformer la puissance électrique fournie par le moteur électrique en puissance mécanique sur les rotors de turbine.

Ceci permet avantageusement d'adapter l'apport de couple à chacun des rotors de turbine en fonction des besoins en énergie.

Le réducteur peut être un réducteur différentiel.

Bien entendu, le moteur électrique peut entrainer directement les rotors de turbine, c'est-à-dire sans qu'un réducteur ne soit connecté entre le moteur électrique et les rotors de turbine.

Le système propulsif peut comprendre une veine centrale configurée pour conduire le flux provenant des générateurs de gaz à la turbine de puissance. De préférence, la veine centrale est configurée pour réduire le débit du flux en cas de défaillance d'au moins un des générateurs de gaz.

Le système propulsif peut comprendre un dispositif de freinage configuré pour arrêter la rotation d'au moins un des rotors de turbine en cas de défaillance dudit rotor de turbine. De préférence, le dispositif de freinage comporte au moins un piston configuré pour venir en contact avec ledit rotor de turbine.

Les générateurs de gaz et les rotors de turbine peuvent être indépendants mécaniquement. En particulier, les générateurs de gaz et les rotors de turbine peuvent être indépendants mécaniquement pendant toutes les phases de vol de l'aéronef.

Les rotors de turbine peuvent être configurés pour entraîner directement en rotation les soufflantes.

L'invention concerne également un aéronef propulsé par un système propulsif selon l'invention, le système propulsif étant intégré à l'arrière d'un fuselage de l'aéronef.

L'invention concerne également un procédé d'utilisation d'un système propulsif d'aéronef selon l'invention. Le procédé comprend l'entrainement en rotation d'au moins un des rotors de turbine simultanément à partir d'un flux provenant des générateurs de gaz et du dispositif d'entrainement électrique.

En mode de fonctionnement nominal, lors d'une phase de vol de pleine puissance propulsive, par exemple au décollage, en montée, ou lors d'un freinage au sol, c'est-à-dire lors d'une inversion de poussée, de l'aéronef, le procédé peut comprendre la décharge des moyens de stockage du dispositif d'entrainement électrique dans le moteur électrique dudit dispositif d'entrainement électrique de sorte à assister en rotation au moins un des rotors de turbine.

En mode de fonctionnement nominal, lors d'une phase de vol de puissance propulsive intermédiaire, par exemple en fin de montée ou en vol croisière de l'aéronef, le procédé peut comprendre l'entrainement en rotation d'au moins un des rotors de turbine uniquement à partir d'un flux provenant des générateurs de gaz. En particulier, le procédé peut comprendre l'extraction d'une puissance électrique à partir du flux des générateurs de gaz à destination des moyens de stockage du dispositif d'entrainement électrique. Autrement dit, le procédé peut comprendre la charge des moyens de stockage du dispositif d'entrainement électrique. Lorsque lesdits moyens de stockage sont entièrement chargés, le procédé peut comprendre l'arrêt de l'extraction de la puissance électrique à partir du flux des générateurs de gaz.

En mode de fonctionnement nominal, lors d'une phase de vol de puissance propulsive réduite le procédé peut comprendre le fonctionnement à la limite de l'extinction des chambres de combustion des générateurs de gaz, ou la réduction de la vitesse de rotation des arbres des générateurs de gaz à un régime correspondant au minimum de maintien de la combustion dans les chambres correspondantes, réduction autorisée par la capacité de ré-accélération des rotors de turbine par le dispositif d'entrainement électrique, permettant d'assurer rapidement la disponibilité de la poussée indépendamment du point de fonctionnement du générateur de gaz. Le procédé peut également comprendre la décharge des moyens de stockage du dispositif d'entrainement électrique de sorte à fournir de l'énergie non propulsive à différents éléments de l'aéronef et/ou une assistance électrique à l'accélération des compresseurs des générateurs de gaz.

En mode de fonctionnement nominal, lors d'une phase de puissance propulsive réduite au sol, le procédé peut comprendre l'extinction des générateurs de gaz et l'entrainement en rotation d'au moins un des rotors de turbine uniquement à partir du dispositif d'entrainement électrique.

En cas de défaillance d'un des générateurs de gaz, le procédé peut comprendre la réduction du débit du flux provenant des générateurs de gaz et allant à la turbine de puissance et l'entrainement en rotation d'au moins un des rotors de turbine à partir d'un flux provenant de l'autre des générateurs de gaz et du dispositif d'entrainement électrique.

En cas de défaillance des deux générateurs de gaz, le procédé peut comprendre l'entrainement en rotation d'au moins un des rotors de turbine uniquement à partir du dispositif d'entrainement électrique.

En cas de défaillance de tout ou partie du propulseur, le procédé peut comprendre le freinage de la rotation des rotors de turbine de manière à ralentir, puis arrêter la rotation des rotors de turbine.

Au sens de l'invention, le système propulsif comprend un propulseur et des générateurs de gaz, un propulseur comprenant l'ensemble des rotors de turbine et des soufflantes situés en aval de l'aéronef et produisant l'effort propulsif.

Dans ce dernier cas, le procédé peut comprendre l'arrêt de l'extraction de la puissance électrique à partir du flux des générateurs de gaz. De plus, le procédé peut comprendre la décharge des moyens de stockage du dispositif d'entrainement électrique de sorte à fournir de l'énergie non propulsive à différents éléments de l'aéronef.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue schématique et en perspective d'un aéronef propulsé par un turboréacteur selon l'art antérieur,
- la figure 2 est une vue selon la coupe II-II du turboréacteur de l'aéronef de la figure 1,
- la figure 3 est une vue en coupe d'un système propulsif d'aéronef selon l'invention, et
- la figure 4 est une vue en coupe d'une partie d'un système propulsif d'aéronef selon un mode de réalisation de l'invention.

### DESCRIPTION DETAILLEE

L'invention concerne un aéronef propulsé par un système propulsif intégré à l'arrière d'un fuselage de l'aéronef.

La figure 3 représente un système propulsif 100 d'un aéronef selon l'invention qui comporte, d'amont en aval dans le sens d'écoulement des gaz représenté par les flèches F, deux générateurs de gaz 102a, 102b distincts montés en parallèle qui alimentent une turbine de puissance 104. Des entrées d'air 106a, 106b distinctes sont agencées pour alimenter chaque générateur de gaz 102a, 102b. Afin d'optimiser le rendement thermique des générateurs de gaz, les entrées d'air 106a, 106b sont agencées de sorte que les générateurs de gaz 102a, 102b n'ingèrent pas de couche limite.

Chaque générateur de gaz 102a, 102b peut comporter au moins un compresseur, par exemple un compresseur basse pression et un compresseur haute pression, une chambre de combustion et au moins une turbine, par exemple une turbine basse pression et une turbine haute pression.

Chaque générateur de gaz 102a, 102b est logé à l'intérieur d'une veine d'écoulement primaire 108a, 108b. Comme représenté sur la figure 3, les veines d'écoulement primaire 108a, 108b convergent sur l'axe longitudinal, noté X, de l'aéronef et forment entre elles un « V » ouvert vers l'amont, dont l'angle d'ouverture est de préférence compris entre 80° et 120°. Les deux veines d'écoulement primaire 108a, 108b convergent dans une veine centrale 110 qui alimente la turbine de puissance 104.

La veine centrale 110 est configurée pour conduire le flux provenant des générateurs de gaz 102a, 102b à la turbine de puissance 104. En cas de défaillance d'au moins un des générateurs de gaz 102a, 102b, la veine centrale 110 peut être configurée pour réduire le débit du flux provenant des générateurs de gaz 102a, 102b et étant transmis à la turbine de puissance 104. Autrement dit, la section de la veine centrale 110 peut être restreinte en cas de défaillance d'au moins un des générateurs de gaz 102a, 102b.

Un mélangeur peut être positionné au niveau de la zone de convergence 110 des veines d'écoulement primaire 108a, 108b afin de mélanger les flux de gaz issus des deux générateurs de gaz 102a, 102b pour créer un flux de gaz unique et homogène destiné à alimenter la turbine de puissance 104.

La turbine de puissance 104 comporte deux rotors de turbine 104a, 104b contrarotatifs qui entrainent de façon contrarotative deux soufflantes 112a, 112b disposées en aval des générateurs de gaz 102a, 102b. Autrement dit, les rotors de turbine 104a, 104b sont solidaires en rotation des soufflantes 112a, 122b. Les rotors de turbine 104a, 104b entrainent directement en rotation les soufflantes 112a, 112b. Les rotors de turbine 104a, 104b sont coaxiaux et centrés sur l'axe longitudinal X de l'aéronef. Les rotors de turbine 104a, 104b tournent autour d'un carter central 114 fixé à la structure de l'aéronef.

Des entrées d'air 121 sont agencées pour alimenter les soufflantes 112a, 112b. Les entrées d'air 121 sont agencées de sorte que la couche limite est ingérée par les propulseurs, c'est-à-dire que la couche limite est ingérée au travers des entrées d'air 121. Plus précisément, les soufflantes sont alimentées par tout ou partie de la couche limite formée autour du fuselage 2 de l'aéronef. Une faible vitesse de la couche limite, permet d'avoir une faible vitesse d'admission, et donc d'éjection, des gaz traversant le système propulsif, ce qui permet d'avoir un rendement propulsif élevé.

Un des rotors de turbine 104a, dit premier rotor de turbine, comprend un corps 116a tubulaire sur lequel sont agencées des aubes 118a. Le corps 116a du premier rotor 104a sépare la veine d'écoulement primaire, c'est-à-dire la veine centrale 110, dans la turbine de puissance 104, de la veine d'écoulement secondaire 120 dans laquelle se trouvent les soufflantes 112a, 112b. Les aubes 118a et le corps 116a du premier rotor 104a sont reliées aux paliers de support du rotor sur le carter central 114 par des bras support 122 qui traversent la veine centrale 110 en amont de la turbine de puissance 104.

L'autre des rotors de turbine 104b, dit deuxième rotor de turbine, comprend des aubes 118b liées à une paroi radialement intérieure de la veine centrale 110 dans la turbine de puissance 104 et intercalées longitudinalement entres les aubes 118a du premier rotor de turbine 104b.

En aval de la turbine de puissance 104, la paroi radialement intérieure de la veine centrale 110 se prolonge par un corps central 124. Comme représenté sur la figure 3, cette paroi est reliée par des bras support 126 à un anneau 128 de support des aubes 118b de la soufflante 112b aval. L'anneau 128 prolonge le corps 116a du premier rotor 104a et comporte une extension vers l'arrière, de façon à former, avec le corps central 124, une tuyère d'éjection primaire en sortie de la turbine de puissance 104.

Sur la figure 3, la soufflante 112a amont, dite première soufflante, est positionnée au niveau de l'entrée de la turbine de puissance 104. La première soufflante 112a est reliée au premier rotor 104a au niveau des bras support 122 qui soutiennent en amont le corps 116a du premier rotor 104a. Ainsi, la première soufflante 112a tourne à la même vitesse que le premier rotor 104a de la turbine de puissance 104.

La soufflante 112b aval, dite deuxième soufflante, est positionnée au niveau de la sortie de la turbine de puissance 104. La deuxième soufflante 112b est reliée au deuxième rotor 104b au niveau de l'anneau 128 de support et des bras support 126 qui le soutiennent. La deuxième soufflante 112b tourne ainsi à la même vitesse que le deuxième rotor 104b de la turbine de puissance 104.

Les soufflantes 112a, 112b sont carénées par une nacelle 130 fixée à la structure de l'aéronef. La nacelle 130 est notamment fixée à l'empennage vertical de l'aéronef, référencé 4 sur la figure 1.

Les soufflantes 112a, 112b sont montées en série dans la veine d'écoulement secondaire 120. Ainsi, le système propulsif 100 est à double flux.

Comme les soufflantes 112a, 112b sont montées en série, en cas de défaillance d'une des soufflantes, l'autre soufflante peut prendre le relai.

De façon similaire, comme la turbine de puissance 104 est alimentée par deux générateurs de gaz 102a, 102b, en cas de défaillance de l'un des générateurs de gaz, l'autre générateur de gaz peut continuer d'alimenter la turbine de puissance.

Le système propulsif 100 comprend en outre un stator 132 formé d'une couronne d'aubes reliant la nacelle 130 au fuselage 2 de l'aéronef en amont de la soufflante 112a amont. Ce stator 132 peut avantageusement servir à améliorer le rendement de la soufflante amont, par exemple en servant de redresseur.

Le système propulsif 100 comprend également un dispositif d'entrainement électrique 140 configuré pour entrainer en rotation au moins un des rotors de turbine 104a, 104b.

Au moins un des rotors de turbine 104a, 104b est apte à être entrainé en rotation simultanément par un flux provenant des générateurs de gaz 102a, 102b et par le dispositif d'entrainement électrique 140.

Par exemple, le premier rotor de turbine 104a peut être entrainé en rotation à la fois par un flux provenant des générateurs de gaz 102a, 102b et par le dispositif d'entrainement électrique 140, tandis que le deuxième rotor de turbine 104b peut être entrainé en rotation uniquement par un flux provenant des générateurs de gaz 102a, 102b.

Le premier rotor de turbine 104a peut être entrainé en rotation uniquement par le dispositif d'entrainement électrique 140, tandis que le deuxième rotor de turbine 104b peut être entrainé en rotation simultanément par un flux provenant des générateurs de gaz 102a, 102b et par le dispositif d'entrainement électrique 140.

Le premier rotor de turbine 104a peut également être entrainé en rotation uniquement par le dispositif d'entrainement électrique 140, tandis que le deuxième rotor de turbine 104b peut être entrainé en rotation uniquement par un flux provenant des générateurs de gaz 102a, 102b.

Les deux rotors de turbine 104a, 104b peuvent aussi, par exemple, être entrainés simultanément par un flux provenant des générateurs de gaz 102a, 102b et par le dispositif d'entrainement électrique 140.

Les deux rotors de turbine 104a, 104b peuvent également être entrainés uniquement par un flux provenant des générateurs de gaz 102a, 102b.

Les deux rotors de turbine 104a, 104b peuvent, par exemple, être entrainés uniquement par le dispositif d'entrainement électrique 140.

Le dispositif d'entrainement électrique 140 comporte au moins un générateur électrique configuré pour transformer une partie de l'énergie du flux provenant des générateurs de gaz 102a, 102b en puissance électrique. De préférence, le dispositif d'entrainement électrique 140 comporte deux générateurs électriques 142a, 142b, chaque générateur électrique étant installé sur un générateur de gaz 102a, 102b. Plus précisément, un générateur électrique 142a, 142b est installé sur l'un des arbres d'un générateur de gaz 102a, 102b, et préférentiellement sur l'arbre basse pression du générateur de gaz.

Le dispositif d'entrainement électrique 140 comporte également des moyens de stockage 144 d'énergie électrique alimentés par le ou les générateurs électrique 142a, 142b. Les moyens de stockage 144 sont préférentiellement agencés au voisinage des générateurs électriques 142a, 142b. Sur la figure 3, les flèches F1 représentent l'alimentation des moyens de stockage 144 par les générateurs électrique 142a, 142b. Les moyens de stockage 144 comprennent, par exemple, des batteries ou des super-condensateurs.

Les moyens de stockage 144 sont configurés pour alimenter un moteur électrique 146. Sur la figure 3, la flèche F2 représente l'alimentation du moteur électrique 146 par les moyens de stockage 144.

En variante, le dispositif d'entrainement électrique 140 peut comporter, à la place des générateurs électriques 142a, 142b et du moteur électrique 146, une unique machine électrique, telle qu'un démarreur/générateur. La machine électrique peut être configurée pour transformer une partie de l'énergie du flux provenant des générateurs de gaz 102a, 102b en puissance électrique et pour entrainer en rotation au moins un des rotors de turbine 104a, 104b. Plus précisément, le démarreur/générateur peut combiner les fonctions assurées séparément par les générateurs électriques 142a, 142b et le moteur électrique 146.

Les moyens de stockage 144 sont configurés pour être rechargés par les générateurs de gaz 102a, 102b via les générateurs électrique 142a, 142b et pour se décharger, par exemple dans le moteur électrique 146.

En particulier, les moyens de stockage 144 sont configurés pour alimenter le moteur électrique 146 pour au moins trois phases de vol de pleine puissance propulsive successives. Autrement dit, la capacité de stockage des moyens de stockage 144 est conçue pour assurer au moins trois phases de vol de pleine puissance propulsive, par exemple une phase de montée et deux phases de décollage, ou leur équivalent en consommation électrique. Ces phases de vol sont assurées par les moyens de stockage 144 de façon successive et sans recharge des moyens de stockage 144. Ceci permet avantageusement de couvrir le cas où une remise de gaz est nécessaire lors d'un atterrissage d'urgence suivant immédiatement un décollage initial.

Les moyens de stockage 144 peuvent être configurés pour alimenter le moteur électrique 146 lors d'une phase de vol de puissance réduite, telle qu'en ralenti, super-ralenti ou au sol. En particulier, au moins un des rotors de turbine 104a, 104b peut être entrainé en rotation uniquement par le dispositif d'entrainement électrique 140 lors d'une phase de vol de puissance réduite. Autrement dit, la capacité des moyens de stockage 144 est configurée pour couvrir les évolutions au sol de l'aéronef en mode entièrement électrique. Dans cette configuration, les générateurs de gaz 102a, 102b peuvent être éteints, c'est-à-dire que les chambres de combustion des générateurs de gaz peut être éteintes.

Les moyens de stockage 144 peuvent également être configurés pour couvrir une pluralité d'assistances transitoires aux accélérations des compresseurs des générateurs de gaz 102a, 102b.

Le moteur électrique 146 est alimenté par le ou les générateurs électrique 142a, 142b, ou par les moyens de stockage 144. Sur la figure 3, les flèches F3 représentent l'alimentation du moteur électrique 146 par les générateurs électrique 142a, 142b.

Le moteur électrique 146 est apte à entrainer en rotation au moins un des rotors de turbine 104a, 104b.

Le moteur électrique 146 peut entrainer en rotation les rotors de turbine 104a, 104b via un réducteur 148, par exemple un réducteur différentiel, un réducteur de type planétaire ou épicycloïdal. Dans ce cas, le réducteur 148 est connecté au moteur électrique 146 et aux rotors de turbine 104a, 104b, et est configuré pour transformer la puissance électrique fournie par le moteur électrique 146 en puissance mécanique sur les rotors de turbine 104a, 104b. Comme représenté sur la figure 3, le réducteur 148 est relié en amont au moteur électrique 146 par un arbre 150 et en aval aux rotors de turbine 104a, 104b. Le réducteur 148 participe ainsi à la génération de la puissance qui entraine les soufflantes 112a, 112b contrarotatives.

En particulier, au moins un des rotors de turbine 104a, 104b est entrainé en rotation à la fois par le flux des gaz issus des générateurs de gaz 102a, 102b passant par la veine centrale 110, et par le moteur électrique 146 via un réducteur 148.

Les générateurs de gaz 102a, 102b sont configurés pour fournir entre 80 % et 95 % de la puissance primaire principale aux rotors de turbine 104a, 104b lors d'une phase de vol de pleine puissance propulsive, telle qu'au décollage. Le complément de puissance est assuré par les moyens de stockage 144 et le moteur électrique 146. Autrement dit, les moyens de stockage 144 et le moteur électrique 146 sont configurés pour fournir entre 5 % et 20 % de la puissance primaire principale aux rotors de turbine 104a, 104b lors d'une phase de vol de pleine puissance propulsive. Par exemple, les générateurs de gaz 102a, 102b peuvent fournir 90% de la puissance primaire principale aux rotors de turbine 104a, 104b, et les moyens de stockage 144 et le moteur électrique 146 fournissent alors 10 % de la puissance primaire principale aux rotors de turbine 104a, 104b.

En cas de défaillance d'un rotor de turbine, 104a, 104b le moteur électrique 146 peut être configuré pour exercer un couple négatif afin de ralentir ou d'arrêter la rotation dudit rotor de turbine via le réducteur 148.

En outre, le système propulsif 100 peut comprendre un dispositif de freinage configuré pour arrêter la rotation d'au moins un des rotors de turbine 104a, 104b en cas de défaillance dudit rotor de turbine, afin de permettre à l'aéronef de regagner un aéroport en minimisant la traînée parasite et les risques de survitesse du rotor propulsif défaillant.

Par exemple, comme représenté sur la figure 4, le système propulsif 100 peut comprendre un premier dispositif de freinage 170 associé au premier rotor de turbine 104a et configuré pour venir en contact avec le premier rotor de turbine 104a afin de ralentir puis arrêter ce dernier, ainsi qu'un deuxième dispositif de freinage 160 associé au deuxième rotor de turbine 104b et configuré pour venir en contact avec le deuxième rotor de turbine 104b afin de le ralentir puis de l'arrêter.

Ces premier et deuxième dispositifs de freinage 160, 170 peuvent être activés de manière indépendante, de manière à choisir le rotor de turbine qui doit être arrêté.

Ces premier et deuxième dispositifs de freinage 160, 170 peuvent prendre la forme de disques 164, 174 solidaires du carter central 114 et appuyant sur une partie correspondante des rotors de turbine 104a, 104b.

La partie solidaire du carter central 114 du premier dispositif de freinage 170 peut être logée dans un espace libre entre le carter central 114 et la partie amont du premier rotor de turbine 104a. Un piston 172 pousse le disque 174 contre une partie 176 du voile du premier rotor de turbine 104a situé sur l'axe X à l'aplomb de la soufflante 112a amont. Ainsi, le premier rotor de turbine 104a est bloqué par le premier dispositif de freinage 170 au niveau où les efforts sont exercés sur le premier rotor de turbine 104a par la soufflante 112a amont. Ceci permet d'éviter que des couples s'exercent entre le premier dispositif de freinage 170 et la soufflante 112a sur la longueur du premier rotor de turbine 104a lorsque ce dernier est arrêté.

De la même manière, la partie solidaire du carter central 114 du deuxième dispositif de freinage 160 peut être logée dans un espace libre entre le carter central 114 et la partie aval du deuxième rotor de turbine 104b. Un piston 162 pousse le disque 164 contre une partie 166 du voile du deuxième rotor de turbine 104b situé sur l'axe X à l'aplomb de la soufflante 112b aval.

Les différents modes de fonctionnement du système propulsif selon l'invention vont maintenant être décrits.

En mode de fonctionnement nominal, c'est-à-dire sans défaillance du système propulsif, on distingue les cas de fonctionnement à pleine puissance propulsive de l'aéronef, les cas de fonctionnement à puissance propulsive intermédiaire et les cas de fonctionnement à puissance propulsive réduite en vol et au sol.

Le fonctionnement à pleine puissance propulsive de l'aéronef correspond aux phases de vol telles que le décollage ou en montée de l'aéronef. Les générateurs de gaz 102a, 102b sont configurés pour fonctionner au maximum de leur capacité et fournissent des gaz chauds qui entrainent les rotors de turbine 104a, 104b au travers de la turbine de puissance 104. Les moyens de stockage 144 sont configurés pour se décharger, c'est-à-dire qu'ils alimentent le moteur électrique 146 et au moins un des rotors de turbine, par exemple les deux rotors de turbine 104a, 104b, au travers de la turbine de puissance 104. Plus précisément, au moins un des rotors de turbine 104a, 104b est entrainé en rotation à la fois par le flux provenant des générateurs de gaz 102a, 102b et par les moyens de stockage 144 et le moteur électrique 146 du dispositif électrique 140.

Le fonctionnement à puissance propulsive intermédiaire correspond aux phases de vol telles qu'un vol croisière. Les générateurs de gaz 102a, 102b sont configurés pour fonctionner au maximum de leur capacité. Les générateurs de gaz 102a, 102b fournissent, tant que les moyens de stockage 144 ne sont pas complètement chargés, l'intégralité de la puissance propulsive au travers des gaz chauds émis, puis convertis par la turbine de puissance 104. Autrement dit, au moins un des rotors de turbine 104a, 104b est entrainé en rotation uniquement par le flux provenant des générateurs de gaz 102a, 102b. Les générateurs de gaz 102a, 102b fournissent également toute la puissance non propulsive requise par l'aéronef, ainsi qu'un surplus d'énergie afin de recharger les moyens de stockage 144. Les générateurs électrique 142a, 142b sont configurés pour extraire une puissance électrique à partir du flux des générateurs de gaz 102a, 102b à destination des moyens de stockage 144. Ainsi, les moyens de stockage 144 sont configurés pour se recharger. Une fois que les moyens de stockage 144 sont entièrement chargés, les générateurs électrique 142a, 142b sont configurés pour arrêter l'extraction de puissance électrique à partir du flux des générateurs de gaz 102a, 102b. Les générateurs de gaz 102a, 102b fonctionnent alors à un régime réduit de manière à fournir l'énergie propulsive et non propulsive nécessaire au maintien de l'aéronef. De façon avantageuse, la réduction du régime des générateurs de gaz permet de minimiser les émissions polluantes. En effet, la réduction du régime des générateurs de gaz permet de diminuer la combustion de carburant fossile, ce qui permet de diminuer les émissions polluantes, telles que des émissions de CO₂ ou de NOx imbrûlés.

En fonctionnement à puissance propulsive réduite en vol de l'aéronef, c'est-à-dire en régime de ralenti, les générateurs de gaz 102a, 102b peuvent fonctionner en régime « super-idle », c'est-à-dire à un régime de rotation faible des arbres des générateurs de gaz avec chambre de combustion fonctionnant à la limite de son extinction. Dans le régime « super-idle », les chambres de combustion des générateurs de gaz brûlent le minimum de carburant possible pour assurer le fonctionnement des générateurs de gaz. De façon avantageuse, la capacité à faire fonctionner les générateurs de gaz dans ce mode permet de minimiser les émissions polluantes, tout en satisfaisant les exigences d'effort propulsif et d'énergie non propulsive de l'aéronef. Les rotors de turbine 104a, 104b peuvent être en mode « windmilling », c'est-à-dire en rotation libre des soufflantes 112a, 122b. Les moyens de stockage 144 sont alors configurés pour fournir ponctuellement aux rotors de turbine 104a, 104b de la puissance propulsive permettant une ré-accélération rapide de ces rotors. Cette fourniture de puissance propulsive ponctuelle est réalisée le temps que les générateurs de gaz 102a, 102b soient ramenés dans leur plage de fonctionnement habituelle. Autrement dit, les moyens de stockage 144 sont configurés pour ré-accélérer les rotors de turbine 104a, 104b de manière à garantir la disponibilité de la poussée à pleine puissance en un temps minimal qui dépend des caractéristiques du système propulsif. Les moyens de stockage 144 sont également configurés pour fournir de l'énergie non propulsive, telle que de l'air sous une pression minimale ou de la puissance mécanique, à différents éléments de l'aéronef. Les moyens de stockage 144 peuvent être configurés pour fournir une assistance électrique à l'accélération des compresseurs des générateurs de gaz 102a, 102b. Ceci permet avantageusement de limiter le phénomène d'excursion vers le pompage. Les compresseurs des générateurs de gaz 102a, 102b peuvent alors être conçus avec une marge au pompage plus faible. En effet, la marge au pompage est influencée par des excursions vers le pompage se déroulant lors de manœuvres d'accélération de l'aéronef. Ceci permet un meilleur rendement des compresseurs, et donc une réduction des émissions polluantes. En outre, ceci permet une meilleure opérabilité des compresseurs, ce qui limite la poussée résiduelle minimale, notamment lorsque le turboréacteur fonctionne au ralenti, et donc permet d'optimiser le profil de vol de l'aéronef, afin de permettre une descente rapide de celui-ci.

En fonctionnement à puissance propulsive réduite lors des évolutions au sol de l'aéronef, c'est-à-dire en régime de ralenti ou de proche ralenti, les générateurs de gaz 102a, 102b peuvent être éteints. En effet, si l'état de charge des moyens de stockage 144 sont suffisants, les générateurs de gaz 102a, 102b sont éteints et la puissance propulsive de l'aéronef est assurée par le dispositif d'entrainement électrique 140. Dans ce cas, au moins un des rotors de turbine 104a, 104b est entrainé en rotation uniquement par le dispositif d'entrainement électrique 140. Le système propulsif 100 n'émet alors pas d'émissions polluantes. Si l'état de charge des moyens de stockage 144 est insuffisant, les générateurs de gaz 102a, 102b fonctionnent en mode ralenti. Dans ce cas, au moins un des rotors de turbine 104a, 104b est entrainé en rotation à la fois par le flux provenant des générateurs de gaz 102a, 102b et par le dispositif d'entrainement électrique 140. Ce mode de fonctionnement peut également être appliqué à une phase de ralentissement et de freinage au sol de l'aéronef, généralement réalisée par inversion de poussée : l'entraînement des rotors de turbine 104a, 104b en mode dit « reverse » est alors assuré par le dispositif d'entrainement électrique 140, combiné à l'activation d'équipements d'inversion des flux d'air, par exemple du type à grilles ou à portes, situés sur la nacelle 130 (non décrits ici), tandis que les générateurs de gaz 102a, 102b demeurent éteints ou en fonctionnement à très faible puissance. Cette utilisation permet de minimiser les émissions polluantes lors de la phase de ralentissement au sol à l'atterrissage, et d'éviter un cycle supplémentaire de forte puissance qui est dommageable à la durée de vie des générateurs de gaz.

En cas de défaillance d'un des générateurs de gaz 102a, 102b, la veine centrale 110 peut être configurée pour diminuer, par exemple de moitié, la capacité de débit du flux provenant des générateurs de gaz 102a, 102b et étant transmis à la turbine de puissance 104. Le générateur de gaz non défaillant est configuré pour fonctionner au maximum de sa capacité et les moyens de stockage 144 sont configurés pour assister la production de la poussée. Autrement dit, les moyens de stockage 144 peuvent être configurés pour fournir au moins de l'énergie propulsive. Plus précisément, au moins un des rotors de turbine 104a, 104b est entrainé en rotation à la fois par le flux provenant du générateur de gaz non défaillant et par le dispositif d'entrainement électrique 140. Ces configurations de la veine centrale, du générateur de gaz non défaillant et des moyens de stockage permettent au système propulsif de fournir plus de 50 % de la capacité du système propulsif en fonctionnement nominal.

En cas de défaillance simultanée des deux générateurs de gaz 102a, 102b, les moyens de stockage 144 sont configurés pour fonctionner au maximum de leur capacité, ce qui permet d'assurer une poussée minimale, tout en maintenant une partie de la génération d'énergie non propulsive. Autrement dit, au moins un des rotors de turbine 104a, 104b est entrainé en rotation uniquement par le dispositif d'entrainement électrique 140.

En cas de défaillance de tout ou partie du propulseur, les générateurs de gaz 102a, 102b sont configurés pour fonctionner au maximum de leur capacité. Les premier et deuxième dispositifs de freinage 160, 170 sont configurés pour bloquer la rotation du ou des rotors de turbine 104a, 104b présentant la défaillance. Ainsi, les dispositifs de freinage arrêtent toute rotation des rotors de turbine 104a, 104b dans la veine centrale 110. Le moteur électrique 146 peut être configuré pour exercer un couple négatif afin de contribuer au ralentissement et à l'arrêt de la rotation des rotors de turbine 104a, 104b via le réducteur 148. Les générateurs électriques 142a, 142b sont configurés pour arrêter l'extraction de puissance électrique à partir du flux des générateurs de gaz 102a, 102b à destination des moyens de stockage 144. En cas de défaillance simultanée des deux rotors du propulseur, les flux de gaz chauds issus des générateurs de gaz 102a, 102b sont directement détendus dans la tuyère constituée par la partie d'éjection du système propulsif et génèrent une poussée de secours en mode jet direct. Ceci permet d'assurer plus de 50 % de la poussée globale du système propulsif. Les moyens de stockage 144 sont configurés pour se décharger et fournir de l'énergie non propulsive aux différents éléments de l'aéronef.

L'invention concerne également un procédé d'utilisation d'un système propulsif 100 d'aéronef selon l'invention.

En mode de fonctionnement nominal, c'est-à-dire sans défaillance du système propulsif 100, le procédé peut comprendre une étape d'entrainement en rotation d'au moins un des rotors de turbine 104a, 104b simultanément à partir d'un flux provenant des générateurs de gaz 102a, 102b et à partir du dispositif d'entrainement électrique 140 lors d'une phase de vol de pleine puissance propulsive, telle qu'au décollage ou en montée de l'aéronef. Cette étape d'entrainement en rotation peut comprendre une sous-étape de décharge des moyens de stockage 144 dans le moteur électrique 146 de sorte à entraîner en rotation au moins un des rotors de turbine 104a, 104b.

Le procédé peut comprendre une étape d'entrainement en rotation d'au moins un des rotors de turbine 104a, 104b uniquement à partir d'un flux provenant des générateurs de gaz 102a, 102b lors d'une phase de vol de puissance propulsive intermédiaire. En particulier, le procédé peut comprendre une étape d'extraction d'une puissance électrique à partir du flux des générateurs de gaz 102a, 102b à destination des moyens de stockage 144. Autrement dit, le procédé peut comprendre une étape de charge des moyens de stockage 144. Une fois que les moyens de stockage 144 sont entièrement chargés, le procédé peut comprendre une étape d'arrêt de l'extraction de la puissance électrique à partir du flux des générateurs de gaz 102a, 102b.

Le procédé peut comprendre une étape de fonctionnement des générateurs de gaz en régime « super-idle » lors d'une phase de vol de puissance propulsive réduite, c'est à dire une phase de fonctionnement en limite d'extinction des chambres de combustion des générateurs de gaz 102a, 102b et une phase de réduction de la vitesse de rotation des arbres des générateurs de gaz 102a, 102b. De plus, le procédé peut comprendre une étape de ré-accélération des rotors de turbine 104a, 104b par le dispositif d'entrainement électrique 140. En régime « super-idle », les chambres de combustion des générateurs de gaz sont encore alimentées et entrainent en rotation les compresseurs et turbines des générateurs de gaz à un régime très faible, c'est-à-dire à la limite de l'extinction. Les générateurs de gaz ne peuvent alors pas répondre, en un temps minimal requis par la réglementation, à une demande soudaine de retour à un régime énergétique plus élevé. De façon avantageuse, le dispositif d'entrainement électrique 140 rend possible cette situation, en permettant de fournir, de façon quasi-instantanée, la puissance requise sur le propulseur, le temps que les générateurs de gaz fassent la transition du régime « super-idle » au régime requis pour fournir la poussée requise.

Le procédé peut également comprendre une étape de décharge des moyens de stockage 144 de sorte à fournir de l'énergie non propulsive à différents éléments de l'aéronef. Le procédé peut également comprendre une étape de décharge des moyens de stockage 144 de sorte à fournir une assistance électrique à l'accélération des compresseurs des générateurs de gaz 102a, 102b.

Selon l'état de charge des moyens de stockage 144, le procédé peut comprendre une étape d'extinction des générateurs de gaz 102a, 102b et une étape d'entrainement en rotation d'au moins un des rotors de turbine 104a, 104b uniquement à partir du dispositif d'entrainement électrique 140 lors d'une phase de puissance propulsive réduite au sol. En alternative, selon l'état de charge des moyens de stockage 144, le procédé peut comprendre une étape d'entrainement en rotation d'au moins un des rotors de turbine 104a, 104b à la fois à partir du flux provenant des générateurs de gaz 102a, 102b et du dispositif d'entrainement électrique 140.

En cas de défaillance d'un des générateurs de gaz, le procédé peut comprendre une étape de réduction du débit du flux provenant des générateurs de gaz 102a, 102b et allant à la turbine de puissance 104 et une étape d'entrainement en rotation d'au moins un des rotors de turbine 104a, 104b à partir d'un flux provenant de l'autre des générateurs de gaz et du dispositif d'entrainement électrique 140. Plus précisément, l'étape de réduction du débit du flux comprend une sous-étape de restriction de la section de la veine centrale 110 de manière à diminuer le débit du flux issu des générateurs de gaz 102a, 102b et transmis à la turbine de puissance 104.

En cas de défaillance des deux générateurs de gaz 102a, 102b, le procédé peut comprendre une étape d'entrainement en rotation d'au moins un des rotors de turbine 104a, 104b uniquement à partir du dispositif d'entrainement électrique 140.

En cas de défaillance de tout ou partie du propulseur, le procédé peut comprendre une étape de freinage de la rotation d'au moins un des rotors de turbine 104a, 104b, de préférence des deux rotors de turbine, de manière à ralentir, puis arrêter la rotation dudit rotor de turbine. Le procédé peut comprendre une étape d'arrêt de l'extraction de la puissance électrique à partir du flux des générateurs de gaz 102a, 102b. De plus, le procédé peut comprendre une étape de décharge des moyens de stockage 144 de sorte à fournir de l'énergie non propulsive à différents éléments de l'aéronef.

L'invention a été présentée de manière préférentielle dans le cas d'un système propulsif intégré en pointe arrière d'un fuselage d'un aéronef, avec deux générateurs de gaz. Bien entendu, l'invention n'est nullement limitée aux modes de réalisations décrits et illustrés, qui ne sont donnés qu'à titre d'exemple. Au contraire, il est également envisageable d'utiliser plus de deux générateurs de gaz, par exemple trois générateurs de gaz, pour alimenter la turbine de puissance, ou bien toute autre source d'air à forte énergie, sans sortir du cadre de l'invention.

## Revendications

1. Système propulsif (100) d'aéronef destiné à être intégré à l'arrière d'un fuselage (2) de l'aéronef, le système propulsif comprenant, d'amont en aval dans le sens d'un écoulement de gaz dans le système propulsif, au moins deux générateurs de gaz (102a, 102b) alimentant une turbine de puissance (104) ayant deux rotors de turbine (104a, 104b) contrarotatifs pour entraîner deux soufflantes (112a, 112b) disposées en aval des générateurs de gaz (102a, 102b), et des entrées d'air (106a, 106b) distinctes pour alimenter chaque générateur de gaz (102a, 102b), **caractérisé en ce qu'**il comprend un dispositif d'entrainement électrique (140) configuré pour entrainer en rotation au moins un des rotors de turbine (104a, 104b) et comportant au moins un générateur électrique (142a, 142b) configuré pour transformer une partie de l'énergie du flux provenant des générateurs de gaz (102a, 102b) en puissance électrique et un moteur électrique (146) alimenté par ledit générateur électrique (142a, 142b) et apte à entrainer en rotation au moins un des rotors de turbine (104a, 104b), ledit générateur électrique (142a, 142b) étant installé sur un desdits générateurs de gaz (102a, 102b), et **en ce que** ledit rotor de turbine est apte à être entrainé en rotation simultanément par un flux provenant desdits générateurs de gaz (102a, 102b) et par le dispositif d'entrainement électrique (140).

2. Système propulsif (100) selon la revendication 1, dans lequel le dispositif d'entrainement électrique (140) comporte des moyens de stockage (144) d'énergie électrique alimentés par ledit générateur électrique (142a, 142b) et configurés pour alimenter ledit moteur électrique (146).

3. Système propulsif (100) selon la revendication 2, dans lequel lesdits moyens de stockage (144) sont configurés pour alimenter ledit moteur électrique (146) pour au moins trois phases de vol de pleine puissance propulsive, telles qu'au décollage ou en montée de l'aéronef, successives.

4. Système propulsif (100) selon l'une des revendications 2 ou 3, dans lequel lesdits moyens de stockage (144) sont configurés pour alimenter ledit moteur électrique (146) lors d'une phase de vol de puissance réduite, telle qu'en ralenti, super-ralenti ou au sol, et dans lequel au moins un des rotors de turbine (104a, 104b) est apte à être entrainé en rotation uniquement par le dispositif d'entrainement électrique (140) lors d'une phase de vol de puissance réduite.

5. Système propulsif (100) selon l'une des revendications 2 à 4, dans lequel lesdits générateurs de gaz (102a, 102b) sont configurés pour fournir entre 80 % et 95 % de la puissance primaire principale aux rotors de turbine (104a, 104b) lors d'une phase de vol de pleine puissance propulsive, telle qu'au décollage, et lesdits moyens de stockage (144) et ledit moteur électrique (146) sont configurés pour fournir entre 5 % et 20 % de la puissance primaire principale aux rotors de turbine (104a, 104b) lors d'une phase de vol de pleine puissance propulsive.

6. Système propulsif (100) selon l'une des revendications 2 à 5, dans lequel lesdits moyens de stockage (144) sont configurés pour se décharger et alimenter le moteur électrique (146) lors d'une phase de vol de pleine puissance propulsive, telle qu'au décollage ou en montée de l'aéronef, et pour se recharger lors d'une phase de vol de puissance propulsive intermédiaire, telle qu'un vol croisière.

7. Système propulsif (100) selon l'une des revendications précédentes, dans lequel le dispositif d'entrainement électrique (140) comporte un réducteur (148) connecté audit moteur électrique (146) et aux rotors de turbine (104a, 104b) et configuré pour transformer la puissance électrique fournie par ledit moteur électrique (146) en puissance mécanique sur lesdits rotors de turbine (104a, 104b).

8. Système propulsif (100) selon la revendication précédente, dans lequel le réducteur (148) est un réducteur différentiel.

9. Système propulsif (100) selon l'une des revendications précédentes, dans lequel les générateurs de gaz (102a, 102b) et les rotors de turbine (104a, 104b) sont indépendants mécaniquement.

10. Système propulsif (100) selon l'une des revendications précédentes, dans lequel les rotors de turbine (104a, 104b) sont configurés pour entraîner directement en rotation les soufflantes (112a, 112b).

11. Aéronef propulsé par un système propulsif (100) selon l'une des revendications précédentes, le système propulsif étant intégré à l'arrière d'un fuselage (2) de l'aéronef.

12. Procédé d'utilisation d'un système propulsif (100) d'aéronef selon l'une des revendications 1 à 10, comprenant l'entrainement en rotation d'au moins un des rotors de turbine (104a, 104b) simultanément à partir d'un flux provenant desdits générateurs de gaz (102a, 102b) et du dispositif d'entrainement électrique (140).

## Patentansprüche

1. Antriebssystem (100) eines Flugzeugs, das dazu vorgesehen ist, an der Rückseite eines Rumpfs (2) des Flugzeugs integriert zu sein, wobei das Antriebssystem stromaufwärts nach stromabwärts in der Richtung eines Gasdurchflusses im Antriebssystem mindestens zwei Gasgeneratoren (102a, 102b), die eine Leistungsturbine (104) versorgen, die zwei gegenläufig drehende Turbinenrotoren (104a, 104b) zum Antreiben von zwei stromabwärts der Gasgeneratoren (102a, 102b) angeordneter Lüfter (112a, 112b) aufweist, und separate Lufteingänge (106a, 106b) zum Versorgen jedes Gasgenerators (102a, 102b) umfasst, **dadurch gekennzeichnet, dass** es eine elektrische Antriebsvorrichtung (140) umfasst, die konfiguriert ist, um mindestens einen der Turbinenrotoren (104a, 104b) in Drehung zu versetzen, und mindestens einen elektrischen Generator (142a, 142b), der konfiguriert ist, um einen Teil der Energie der von den Gasgeneratoren (102a, 102b) stammenden Strömung in elektrische Leistung zu verwandeln, und einen Elektromotor (146) umfasst, der von dem elektrischen Generator (142a, 142b) versorgt wird und imstande ist, mindestens einen der Turbinenrotoren (104a, 104b) in Drehung zu versetzen, wobei der elektrische Generator (142a, 142b) auf einem der Gasgeneratoren (102a, 102b) installiert ist, und dadurch, dass der Turbinenrotor imstande ist, gleichzeitig von einer von den Gasgeneratoren (102a, 102b) stammenden Strömung und von der elektrischen Antriebsvorrichtung (140) in Drehung versetzt zu werden.

2. Antriebssystem (100) nach Anspruch 1, wobei die elektrische Antriebsvorrichtung (140) Speichermittel (144) für elektrische Energie umfasst, die von dem elektrischen Generator (142a, 142b) versorgt werden und konfiguriert sind, um den Elektromotor (146) zu versorgen.

3. Antriebsvorrichtung (100) nach Anspruch 2, wobei die Speichermittel (144) konfiguriert sind, um den Elektromotor (146) für mindestens drei aufeinanderfolgende Flugphasen mit voller Antriebsleistung, wie beim Start oder beim Steigflug des Flugzeugs zu versorgen.

4. Antriebssystem (100) nach einem der Ansprüche 2 oder 3, wobei die Speichermittel (144) konfiguriert sind, um den Elektromotor (146) bei einer Flugphase mit reduzierter Leistung, wie beim Leerlauf, Super-Leerlauf oder am Boden zu versorgen, und wobei mindestens einer der Turbinenrotoren (104a, 104b) imstande ist, bei einer Flugphase mit reduzierter Leistung einzig von der elektrischen Antriebsvorrichtung (140) in Drehung versetzt zu werden.

5. Antriebssystem (100) nach einem der Ansprüche 2 bis 4, wobei die Gasgeneratoren (102, 102b) konfiguriert sind, um bei einer Flugphase mit voller Antriebsleistung, wie beim Start, zwischen 80 % und 95 % der primären Hauptleistung an die Turbinenrotoren (104a, 104b) zu liefern, und die Speichermittel (144) und der Elektromotor (146) konfiguriert sind, um bei einer Flugphase mit voller Antriebsleistung zwischen 5 % und 20 % der primären Hauptleistung an die Turbinenrotoren (104a, 104b) zu liefern.

6. Antriebssystem (100) nach einem der Ansprüche 2 bis 5, wobei die Speichermittel (144) konfiguriert sind, um sich bei einer Flugphase mit voller Antriebsleistung, wie beim Start oder beim Steigflug des Flugzeugs, zu entladen und den Elektromotor (146) zu versorgen, und um sich bei einer Flugphase mit mittlerer Antriebsleistung, wie einem Reiseflug, wiederaufzuladen.

7. Antriebssystem (100) nach einem der vorstehenden Ansprüche, wobei die elektrische Antriebsvorrichtung (140) ein mit dem Elektromotor (146) und den Turbinenrotoren (104a, 104b) verbundenes Getriebe (148) umfasst und konfiguriert ist, um die von dem Elektromotor (146) gelieferte elektrische Leistung in mechanische Leistung an den Turbinenrotoren (104a, 104b) umzuwandeln.

8. Antriebssystem (100) nach dem vorstehenden Anspruch, wobei das Getriebe (148) ein Differentialgetriebe ist.

9. Antriebssystem (100) nach einem der vorstehenden Ansprüche, wobei die Gasgeneratoren (102a, 102b) und die Turbinenrotoren (104a, 104b) mechanisch unabhängig sind.

10. Antriebssystem (100) nach einem der vorstehenden Ansprüche, wobei die Turbinenrotoren (104a, 104b) konfiguriert sind, um die Lüfter (112a, 112b) direkt in Drehung zu versetzen.

11. Flugzeug, das von einem Antriebssystem (100) nach einem der vorstehenden Ansprüche angetrieben wird, wobei das Antriebssystem an der Rückseite eines Rumpfs (2) des Flugzeugs integriert ist.

12. Verfahren zum Verwenden eines Antriebssystems (100) eines Flugzeugs nach einem der Ansprüche 1 bis 10, umfassend das In-Drehung-Versetzen mindestens eines der Turbinenrotoren (104a, 104b) gleichzeitig von einer von den Gasgeneratoren (102a, 102b) stammenden Strömung und von der elektrischen Antriebsvorrichtung (140) ausgehend.

## Claims

1. An aircraft propulsion system (100) intended for being integrated into the rear of an aircraft fuselage (2), the propulsion system comprising, from upstream to downstream in the direction of a gas flow in the propulsion system, at least two gas generators (102a, 102b) supplying a power turbine (104) having two counter-rotating turbine rotors (104a, 104b) for driving two fans (112a, 112b) disposed downstream of the gas generators (102a, 102b), and separate air inlets (106a, 106b) for supplying each gas generator (102a, 102b), **characterised in that** it comprises an electrical drive device (140) configured to rotate at least one of the turbine rotors (104a, 104b) and comprising at least one electrical generator (142a, 142b) configured to transform part of the energy of the flow coming from the gas generators (102a, 102b) into electrical power and an electric motor (146) supplied by said electrical generator (142a, 142b) and capable of rotating at least one of the turbine rotors (104a, 104b), said electrical generator (142a, 142b) being installed on one of said gas generators (102a, 102b), and **in that** said turbine rotor is capable of being rotated simultaneously by a flow coming from said gas generators (102a, 102b) and by the electrical drive device (140).

2. The propulsion system (100) according to claim 1, wherein the electrical drive device (140) comprises electric energy storage means (144) supplied by said electrical generator (142a, 142b) and configured to supply said electric motor (146).

3. The propulsion system (100) according to claim 2, wherein said storage means (144) are configured to supply said electric motor (146) for at least three successive full propulsive power flight phases, such as during take-off or climb of the aircraft.

4. The propulsion system (100) according to one of claims 2 or 3, wherein said storage means (144) are configured to supply said electric motor (146) during a reduced power flight phase, such as idle, super-idle or ground, and wherein at least one of the turbine rotors (104a, 104b) is capable of being rotated solely by the electrical drive device (140) during a reduced power flight phase.

5. The propulsion system (100) according to one of claims 2 to 4, wherein said gas generators (102a, 102b) are configured to provide between 80% and 95% of the main primary power to the turbine rotors (104a, 104b) during a full propulsive power flight phase, such as during take-off, and said storage means (144) and said electric motor (146) are configured to provide between 5% and 20% of the main primary power to the turbine rotors (104a, 104b) during a full propulsive power flight phase.

6. The propulsion system (100) according to one of claims 2 to 5, wherein said storage means (144) are configured to discharge and supply the electric motor (146) during a full propulsive power flight phase, such as during take-off or climb of the aircraft, and to recharge during an intermediate propulsive power flight phase, such as a cruise flight.

7. The propulsion system (100) according to one of the preceding claims, wherein the electrical drive device (140) comprises a reduction gear (148) connected to said electric motor (146) and to the turbine rotors (104a, 104b) and configured to transform electrical power from said electric motor (146) to mechanical power on said turbine rotors (104a, 104b).

8. The propulsion system (100) according to the preceding claim, wherein the reduction gear (148) is a differential reduction gear.

9. The propulsion system (100) according to one of the preceding claims, wherein the gas generators (102a, 102b) and the turbine rotors (104a, 104b) are mechanically independent.

10. The propulsion system (100) according to one of the preceding claims, in which the turbine rotors (104a, 104b) are configured to directly rotate the fans (112a, 112b).

11. An aircraft powered by a propulsion system (100) according to one of the preceding claims, the propulsion system being integrated into the rear of a fuselage (2) of the aircraft.

12. A method of using an aircraft propulsion system (100) according to one of claims 1 to 10, comprising the rotating of at least one of the turbine rotors (104a, 104b) simultaneously by a flow coming from said gas generators (102a, 102b) and by the electrical drive device (140).
